Europäisches Patentamt

European Patent Office

Office européen des brevets

(19)

(11) Veröffentlichungsnummer: **0 353 382**

**A1**

(12) # EUROPÄISCHE PATENTANMELDUNG

(21) Anmeldenummer: **89104724.3**

(22) Anmeldetag: **16.03.89**

(51) Int. Cl.⁴: **H05B 41/18**

(30) Priorität: **02.08.88 DE 3826234**

(43) Veröffentlichungstag der Anmeldung:
**07.02.90 Patentblatt 90/06**

(84) Benannte Vertragsstaaten:
**CH DE ES FR IT LI**

(71) Anmelder: **Kulzer GmbH**
**Philpp-Reis-Strasse 8**
**D-6393 Wehrheim (TS.)1(DE)**

(72) Erfinder: **Oppawsky, Steffen**
**Gartenfeldstrasse 22a**
**D-6380 Bad Homburg(DE)**

(74) Vertreter: **Heinen, Gerhard, Dr.**
**Heraeus Holdlng GmbH Zentralbereich**
**Patente und Lizenzen Heraeusstrasse 12-14**
**D-6450 Hanau am Main(DE)**

(54) **Schaltungsanordnung zum Betrieb einer Niederdruckgasentladungslampe.**

(57) Eine Schaltungsanordnung zum Betrieb einer Niederdruckgasentladungslampe ist mit einem Heiztransformator versehen, welcher zwei getrennte Sekundärwicklungen aufweist, die mit den Lampenelektroden ständig verbunden sind und diese mit einem Vorheizstrom versorgen. Parallel zur Primärwicklung des Transformators ist eine Reihenschaltung aus Betriebsschalter, Vorschaltdrossel und der von den Elektroden gebildeten Entladungsstrecke der Lampe angeschlossen, wobei die Elektroden über eine parallel zur Entladungsstrecke geschaltete Startervorrichtung miteinander verbunden sind.

EP 0 353 382 A1

## Schaltungsanordnung zum Betrieb einer Niederdruckgasentladungslampe

Die Erfindung betrifft eine Schaltungsanordnung zum Betrieb einer Niederdruckgasentladungslampe mit zwei vorheizbaren, an jeweils getrennten Sekundärwicklungen eines Heiztransformators direkt angeschlossenen Elektroden, wobei die Primärwicklung des Heiztransformators an eine Wechselspannungsquelle zur Stromversorgung anschließbar ist.

Schaltungsanordnungen zum Betrieb von Niederdruckgasentladungslampen mit vorheizbaren Elektroden sind bekannt. So beschreibt die EP-PS 111 296 eine Helligkeitssteuerung für eine Niederdruckentladungslampe mit zwei heizbaren Elektroden, die an jeweils eine Sekundärwicklung eines Heiztransformators angeschlossen sind. Die über eine Vorschaltdrossel an ein Steuergerät zur Helligkeitssteuerung angeschlossene Lampe wird zusätzlich zur Stabilisierung der veränderbaren Spannung des Steuergerätes an eine Hilfsspannungsquelle angeschlossen, welche eine hochfrequente Wechselspannung zur Aufrechterhaltung der Grundionisierung erzeugt. Es handelt sich dabei um eine Schaltungsanordnung aus mehreren komplexen Baugruppen, welche verhältnismäßig aufwendig und kostspielig ist.

Die Erfindung stellt sich die Aufgabe, eine Schaltungsanordnung für eine Niederdruckgasentladungslampe zu schaffen, welche auf verhältnismäßig einfache weise einen Bereitschaftsbetrieb durch Vorglühen der Lampenelektroden ermöglicht; dabei soll das Quecksilber in verdampftem Zustand gehalten werden und die optimale Arbeitstemperatur der Leuchtstoffschicht aufrechterhalten werden.

Die Aufgabe wird durch die kennzeichnenden Merkmale des Anspruchs 1 gelöst.

Aus Sicherheitsgründen ist die Primärwicklung des Transformators über einen zweipoligen Schalter an die Wechselspannungsquelle anschließbar. Weiterhin kann der Betriebsschalter als steuerbarer Schalter mit einem Signaleingang ausgebildet sein.

Um die Strahlungsintensität durch Bündelung mehrerer Lampen zu erhöhen, ist es möglich, auf der Sekundärseite des Transformators weitere Heizwicklungspaare zur Vorglühung der Elektroden zusätzlicher Lampen anzuordnen. Im Leuchtbetrieb sind die aus Vorschaltdrossel und Lampe bestehenden Reihenschaltungen zur Primärwicklung parallel geschaltet. Die Betätigung kann über einen für alle Lampen gemeinsamen Betriebsschalter erfolgen, es ist jedoch auch möglich, die Lampen durch steuerbare Schalter einzeln oder in Gruppen gleichzeitig oder nacheinander zu betätigen. So können Lampen unterschiedlicher Spektralbereiche in zeitlich aufeinanderfolgenden Phasen ein - bzw. ausgeschaltet werden, ein Verfahren, das beispielsweise in der Polymerisation lichthärtender Kunststoffe einsetzbar ist.

Als vorteilhaft erweist sich die verhältnismäßig einfache Bauweise unter Einsatz handelsüblicher Bauelemente; sie erzeugt verhältnismäßig wenig Wärmeverluste und kann aufgrund ihres geringen Raumbedarfes als integraler Bestandteil in einem Lampengehäuse untergebracht werden.

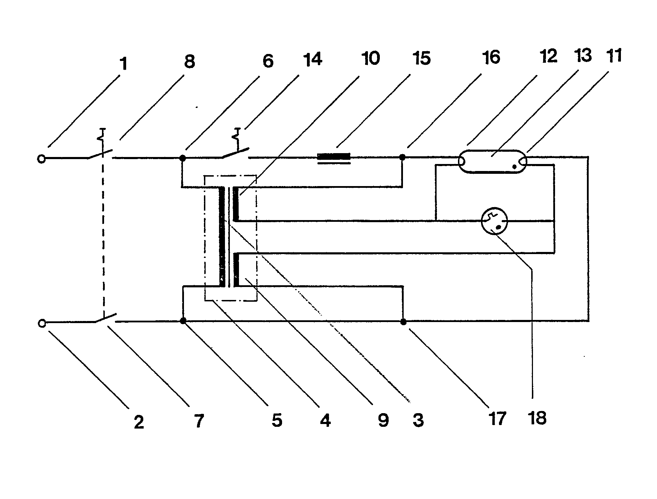

In folgendem ist der Gegenstand der Erfindung anhand der Figur näher erläutert.

Gemäß der Figur wird die an den Klemmen 1, 2 liegende Wechselspannung über die Schaltkontakte 7, 8 mit den Klemmen 5, 6 der Primärwicklung 3 eines Heiztransformator 4 verbunden. Auf der Sekundärseite weist Transformator 4 zwei Heizwicklungen 9, 10 auf, wobei das Windungsverhältnis zwischen Primär- und Sekundärspule im Bereich von 50 : 1 bis 60 : 1 liegt. Im vorliegenden Ausführungsbeispiel beträgt das Windungsverhältnis 55 : 1, so daß eine Wechselspannung von 220 V auf der Primärseite zu einer sekundärseitigen Spannung von 4 V transformiert wird. Die Sekundärwicklungen 9, 10 sind jeweils mit einer Lampenelektrode 11, 12 der Entladungslampe 13 direkt verbunden. Zwischen den Elektroden 11, 12 ist parallel zur Entladungsstrecke der Lampe 13 ein Starter 18 geschaltet.

Parallel zu der mit den Klemmen 5, 6 verbundenen Primärwicklung 3 ist der eigentliche Lampenstromkreis geschaltet, welcher aus Schalter 14, Vorschaltdrossel 15 sowie der zwischen den Elektroden 11, 12 liegenden Entladungsstrecke besteht; der Schalter 14 und Vorschaltdrossel 15 sind dabei zwischen Klemme 6 und dem Anschlußpunkt 16 der Sekundärwicklung 10 angeschlossen, während Klemme 5 mit dem Anschlußpunkt 17 der Heizwicklung 9 direkt verbunden ist.

Es ist auch möglich, Schalter 14 als steuerbaren Schalter einzusetzen, welcher durch ein Steuersignal betätigt wird.

Während des Bereitschaftsbetriebes sind die Schaltkontakte 7, 8 geschlossen, so daß die beiden Sekundärwicklungen 9, 10 einen Vorheizstrom in die Elektroden 11, 12 einspeisen. Dabei werden die Elektroden auf ihrer Betriebstemperatur gehalten, während gleichzeitig das Quecksilber in verdampftem Zustand verharrt und der Leuchtstoff seine optimale Arbeitstemperatur aufrechterhält. An der von den Lampenelektroden 11, 12 gebildeten Entladungsstrecke liegt keine Spannung an, solange Betriebsschalter 14 geöffnet ist.

Wird nun Betriebsschalter 14 geschlossen, so fließt ein Strom über die beiden Lampenelektroden zu Starter 18; Starter 18 ist eine kleine mit Edelgas gefüllte Glimmlampe, deren Anschlußkontakte mit einem Bimetallstreifen überbrückbar sind. Bei geschlossenem Betriebsschalter 14 erwärmt die Glimmentladung den Bimetallstreifen, der sich durchbiegt und den Stromkreis schließt; dabei fließt ein durch die Vorschaltdrossel 15 begrenzter Strom, wobei die Glimmentladung aufhört und der Bimetallstreifen sich wieder abkühlt. Nach Abkühlung des Edelgases in Starter 18 öffnet sich der vom Bimetallstreifen gebildete Kontakt, so daß der durch Vorschaltdrossel 15 und Schalter 14 führende Stromkreis unterbrochen wird. Diese Unterbrechung hat eine Selbstinduktion der Drossel zur Folge, so daß bei einer Wechselspannung von 220 V ein Spannungsstoß von ca. 1000 V erzeugt wird. Nach der Zündung der Lampe 13 ruft der induktive Widerstand der Vorschaltdrossel einen so großen Spannungsabfall hervor, daß nur noch eine Spannung von ca. 100 V an der Lampe liegt, so daß der Starter 18 nicht mehr gezündet wird. Es ist weiterhin möglich, zur Funkentstörung parallel zum Starter einen Kondensator zu schalten.

Die Schaltungsanordnung wird vorzugsweise als integraler Bestandteil eines Lampengehäuses für U-förmige Niederdruckgasentladungslampen eingesetzt, wobei die beiden Elektroden in Fassungen aus bzw. in das Gehäuse der Schaltungsanordnung einsetzbar sind. Weiterhin ist es möglich, auf dem Gehäuse ein Reflektorsystem vorzusehen.

Die erfindungsgemäße Schaltungsanordnung wird vorzugsweise bei Lichtpolymerisationsgeräten im Bereich der Dentaltechnik, der Medizin, der Technik und der Kosmetik eingesetzt, wobei sich der Polymerisationsraum blendfrei öffnen läßt. Nach dem Wiedereinschalten gibt die Lampe sofort ihre volle Lichtleistung ab.

## Ansprüche

1. Schaltungsanordnung zum Betrieb einer Niederdruckgasentladungslampe mit zwei vorheizbaren, an jeweils getrennten Sekundärwicklungen eines Heiztransformators direkt angeschlossenen Elektroden, wobei die Primärwicklung des Heiztransformators an eine Wechselspannungsquelle zur Stromversorgung anschließbar ist, dadurch gekennzeichnet, daß parallel zur Primärwicklung (3) eine Reihenschaltung aus einem Betriebsschalter (14), einer Vorschaltdrossel (15) und der von den Elektroden (11, 12) gebildeten Entladungsstrecke der Lampe (13) geschaltet ist, wobei die Elektroden (11, 12) über eine parallel zur Entladungsstrecke geschaltete Startervorrichtung (18) miteinander verbunden sind.

2. Schaltungsanordnung nach Anspruch 1, dadurch gekennzeichnet, daß die Primärwicklung (3) des Transformators über einen (zweipoligen) Schalter (7, 8) an die Wechselspannungsquelle (1, 2) anschließbar ist.

3. Schaltungsanordnung nach Anspruch 1 oder 2, dadurch gekennzeichnet, daß der Betriebsschalter (14) als steuerbarer Schalter mit einem Signaleingang ausgebildet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-123963 (BBC) <br> * Seite 2, Zeile 30 - Seite 3, Zeile 15; Figur 1 * <br> --- | 1-3 | H05B41/18 |
| A | EP-A-165893 (STARKSTROM ELEKTRONIK AG) <br> * Zusammenfassung; Figur 1 * <br> --- | 1-3 | |
| A,D | EP-A-111296 (SIEMENS) <br> * Figur 1 * <br> --- | 1 | |
| A | FR-A-2384404 (PHILIPS) <br> * Seite 8, Zeile 25 - Seite 8, Zeile 37; Figuren 3, 7, 11 * <br> ----- | 1-3 | |
| | | | **RECHERCHIERTE SACHGEBIETE (Int. Cl.5)** <br><br> H05B <br> B29C |

Der vorliegende Recherchenbericht wurde für alle Patentansprüche erstellt

| Recherchenort | Abschlußdatum der Recherche | Prüfer |
|---|---|---|
| DEN HAAG | 31 OKTOBER 1989 | SPEISER P. |